# EUROPEAN PATENT SPECIFICATION

(11) **EP 2 750 951 B1**
(45) Date of publication and mention of the grant of the patent: **03.01.2018**
(21) Application number: 12769707.6
(22) Date of filing: 30.08.2012
(51) Int. Cl.: B60W 40/09, B60W 50/14, G07C 5/00, B60R 16/023, B60R 25/102

(54) **SYSTEM FOR MONITORING THE DRIVING MODES OF A VEHICLE**
SYSTEM ZUR ÜBERWACHUNG DER FAHRMODI EINES FAHRZEUGS
SYSTÈME POUR SURVEILLER LES MODES DE CONDUITE D'UN VÉHICULE

(30) Priority: 01.09.2011 IT MO20110226
(43) Date of publication of application: 09.07.2014
(73) Proprietor: Meta System S.p.A., 42124 Reggio Emilia (IT)
(72) Inventor: SIMONAZZI, Giuseppe, I-42123 Reggio Emilia (IT)
(74) Representative: Grana, Daniele
(86) International application number: PCT/IB2012/001688
(87) International publication number: WO 2013/030660

(56) References cited:
- EP-A2- 1 968 029
- WO-A1-2008/078088
- WO-A2-2006/131926
- GB-A- 860 965
- US-A1- 2002 019 703
- US-A1- 2008 255 722

## Description

### Technical Field

The present invention relates to a system for monitoring the driving modes of a vehicle, usable in particular in the field of insurance, to manage company fleets, for eCall (emergency call) and bCall (breakdown call) services or similar services.

### Background Art

Electronic apparatus are known which, once installed on board a vehicle, are able to detect how the vehicle is used over a period of time.

Such apparatus can be used, for example, in the insurance field, to determine personalized tariffs on the basis of actual vehicle use or for the subsequent determination and assessment of sudden events such as accidents.

The apparatus of known type generally comprise a control unit installable on board the vehicle, inside the vehicle compartment, and connectable to the electronics of the vehicle itself.

Such apparatus also comprise a radio-wave device, of the type commonly used in the field of mobile phones such as, e.g., a GSM, GPRS, UMTS transceiver or the like.

The radio-wave device, in particular, supports the sending of the information collected by the apparatus towards a remote storage and data processing central unit.

If necessary, the radio-wave device is used to receive software updates from the remote central unit for the management of the apparatus on board the vehicle.

Such apparatus generally also comprise a satellite receiver of the type of a GPS receiver or equivalent, which allows locating the vehicle through the detected latitude and longitude and, if necessary, altitude coordinates.

In practice, the operation of the apparatus contemplates the collection, at regular intervals, of information on the position of the vehicle by means of the GPS receiver and the subsequent transmission of such information towards the remote central unit by means of the radio-wave device.

The information thus obtained from the remote central unit is then processed to determine the useful data for the purpose of the specific scope.

Further details can be collected by the apparatus by means of the use of further devices such as, e.g., an accelerometer fitted on the vehicle and suitable for detecting sudden accelerations and decelerations.

The accelerometer, in particular, can be used in the insurance sector to determine the dynamics of an accident and, therefore, the responsibilities tied to it.

In particular, the presence of the accelerometer allows detecting sudden accelerations and decelerations of the vehicle due to the occurrence of an accident, thereby permitting the reconstruction of the dynamics of the accident itself.

For insurance purposes, the analysis by the remote central unit of the data collected by the accelerometer can be advantageously used to significantly reduce the percentage of accident frauds.

These apparatus of known type however are susceptible to upgrading, in particular aimed at a better use of the information collected by the apparatus installed on board the vehicle, in order to provide clear and useful indications to the driver so as to considerably limit the possibility of road accidents.

Furthermore, the unit must be fitted inside the vehicle compartment and must be suitably connected to the vehicle electronics.

Consequently, the unit must be suitably fastened inside a compartment of the vehicle interior normally used for other purposes or, in any case, must be positioned so as not to create hindrance to the vehicle driver and not be unaesthetic to look at.

Document US 2008/255722 A1 discloses a system and a method for evaluating driver performance, comprising detecting operations of a vehicle using an on-board vehicle monitoring system, comparing the operations to predetermined criteria, identifying violations of the predetermined criteria, tracking violations that occur during an evaluation period, and, at the end of the evaluation period, calculating a grade associated with operation of the vehicle.

Document WO 2006/131926 A2 discloses a system for analyzing and evaluating the performance and behavior of a driver of a vehicle, and for displaying the results of the analysis and evaluation. A vehicle sensor utility is used to monitor the state of the vehicle while being driven by the driver. One or more ratings of the driver's driving performance are calculated based upon the driving maneuvers as executed by the driver. The ratings are displayed on a display.

Document WO 2008/078088 A1 discloses a method of operating a vehicle being driven along a road by a driver comprising gathering data whilst the vehicle is being driven indicative of the manner in which the vehicle is being operated using a driver information device fitted to the vehicle. An on-board vehicle processing unit that provides feedback to a driver is also disclosed.

### Description of the Invention

The main object of the present invention is to provide a system for monitoring the driving modes of a vehicle which permit collecting approximate information on the driving modes of a vehicle and which guarantee the effective use of such information aimed at considerably limiting the possibilities of road accidents.

Another object of the present invention is to provide a system for monitoring the driving modes of a vehicle having an apparatus which is easy to install inside a vehicle at a low cost.

Another object of the present invention is to provide a system for monitoring the driving modes of a vehicle having an apparatus installable inside a vehicle which does not hinder the movements of the driver or of the other passengers inside the vehicle interior.

Another object of the present invention is to provide a system for monitoring the driving modes of a vehicle having an apparatus installable inside a vehicle which is nice to look at.

Another object of the present invention is to provide a system for monitoring the driving modes of a vehicle which allows to overcome the mentioned drawbacks of the state of the art in the ambit of a simple, rational, easy and effective to use as well as low cost solution.

The above objects are achieved by the system according to claim 1.

### Brief Description of the Invention

Other characteristics and advantages of the present invention will become more evident from the description of a preferred, but not sole, embodiment of a system for monitoring the driving modes of a vehicle, illustrated purely as an example but not limited to the annexed drawings in which:
figure 1 is a general diagram of the system according to the invention;
figure 2 is an axonometric view of the apparatus of the system according to the invention;
figure 3 is a general functional diagram of the apparatus of the system according to the invention.

### Embodiments of the Invention

With particular reference to such figures, globally indicated by 1 is a system for monitoring the driving modes of a vehicle, usable in particular in the field of insurance, to manage company fleets, for eCall (emergency call) and bCall (breakdown call) services or similar services.

With specific reference to the application of the invention in the insurance field, by the expression "monitoring the driving modes" is meant the detection and the analysis of that information potentially useful for determining the risks, meaning the unsafe driving of the vehicle, or the events, meaning accidents or theft, to which the vehicle could be subject.

The system 1 comprises an electronic apparatus 2 which can be installed on a vehicle V and which is suitable for collecting information on the driving mode of the vehicle itself.

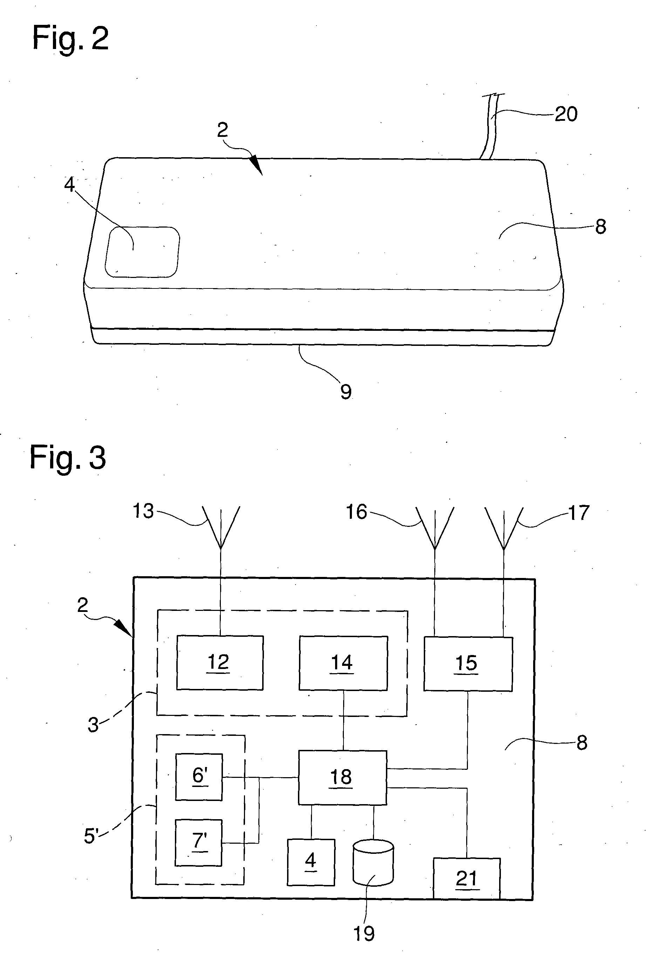

In particular, the apparatus 2 has detection means for detecting information on the driving modes of the vehicle V, altogether schematically indicated in figure 3 by the reference 3.

Such information on the driving modes of the vehicle V can comprise, e.g., the instantaneous running speed of the vehicle V, the variations in instantaneous acceleration of the vehicle V along one or more directions, and the geographic position of the vehicle V.

The apparatus 2 also comprises signaling means 4 of the visual and/or sound type suitable for assisting the driver of the vehicle during driving. The system 1 comprises assessment means 5 for assessing the information detected and relative to the driving modes of the vehicle V. The assessment means 5 are associated with the signaling means 4 and are suitable for controlling such signaling means depending on the detected information to signal in real time to the driver of the vehicle V the following driving conditions:
- a normal driving state, corresponding to a driving mode of the driver of the vehicle such as not to produce any potentially dangerous situation;
- a state of alert, corresponding to an abnormal driving mode of the driver of the vehicle;
- a dangerous driving state, corresponding to a driving mode of the driver of the vehicle such as to produce potentially dangerous situations.

In particular, with reference to the embodiment shown in the illustrations and described below in detail, the assessment means 5 comprise first comparison means 6 suitable for comparing the instantaneous speed of the vehicle V with one or more reference speed values.

If, for example, within a preset time interval, the detected instantaneous speed of the vehicle V is lower than a maximum reference speed value, then the signaling means 4 signal to the driver a normal driving state.

If instead, within a preset time interval, the detected instantaneous speed of the vehicle V suddenly varies, exceeding a maximum reference speed value in certain instants, then the signaling means 4 signal to the driver a state of alert.

If, finally, within a preset time interval, the detected instantaneous speed of the vehicle V is higher than a maximum reference speed value, then the signaling means 4 signal to the driver a dangerous driving state.

Furthermore, the assessment means 5 comprise second comparison means 7 suitable for comparing the variations in instantaneous acceleration of the vehicle V with one or more reference acceleration variation values.

In this respect, it must be pointed out that, preferably, the detection means 3 measure the variations in instantaneous acceleration along a longitudinal direction and a lateral direction of the vehicle V.

If, for example, within a preset time interval the detected variations in instantaneous acceleration are lower than a maximum reference acceleration variation value, then the signaling means 4 signal a normal driving state to the driver.

In practice, this means the driver of the vehicle V has a virtuous behaviour, meaning a uniform driving mode, without excessive, or at least only slight variations in instantaneous acceleration, which point to a reduced risk of potentially hazardous situations.

If, instead, within a preset time interval, the variations in instantaneous acceleration are higher than a maximum reference acceleration variation value, then the signaling means 4 signal a state of alert to the driver.

If, finally, the detected variations in instantaneous acceleration higher than the maximum reference acceleration variation value continue over time, then the signaling means 4 signal a dangerous driving state to the driver.

In this case, this means that the detection means 3 detect continuous and lasting acceleration peaks, both positive and negative. If this occurs in a longitudinal direction only, this indicates an incorrect use of the vehicle in terms of consumption and CO2 emissions. If the accelerations also occur in a cross direction, higher-risk behaviours exist in relation to possible drops in attention due to tiredness, bad visibility or distraction phenomena.

Preferably, the system 1 is oriented towards the monitoring of the driving modes for prevalently insurance purposes, and therefore the acceleration and speed reference values are determined so as to detect cautious driving which does not cause risks for the driver him/herself and those near to him/her. Advantageously, the reference speed values and reference acceleration variation values are also set according to the geographic position of the vehicle V.

For example, some of the parameters taken into consideration can comprise the speed permitted within the transit area of the vehicle, the type of area corresponding to such position (e.g., urban area, suburban area, motorway), the type of road, the situation of the traffic along the route of the vehicle V.

The system 1 then determines the driving behaviour according to external factors and consequently corrects the type of signal to the driver.

For example, continuous variations in sideways direction in conditions of heavy traffic indicate a very bad behaviour which increases risks for the driver. In this case, the system 1 immediately informs the driver of the bad behaviour by means of a dangerous driving state signal.

Usefully, the behaviour of the system 1 is dynamically variationable according to the driver's driving record. In other words, acceleration peaks can be deemed more or less serious depending on the immediate past. For example, in the case of a uniform and monotonous motorway route, a small variation in behaviour can be interpreted as hazardous. The signaling means 4 are composed of a luminous signaling device made on the apparatus 2 and suitable for signaling with different colors the normal driving state, the state of alert and the dangerous driving state.

Preferably, the luminous signaling device 4 uses LEDs of different colours, in particular:
- a green LED to signal normal driving state;
- a yellow LED to signal state of alert;
- a red LED to signal dangerous driving state.
The apparatus 2 comprises supporting means 8 positionable in correspondence to a glass G inside the compartment of the vehicle V. The supporting means 8 are made up of a box-shaped container.

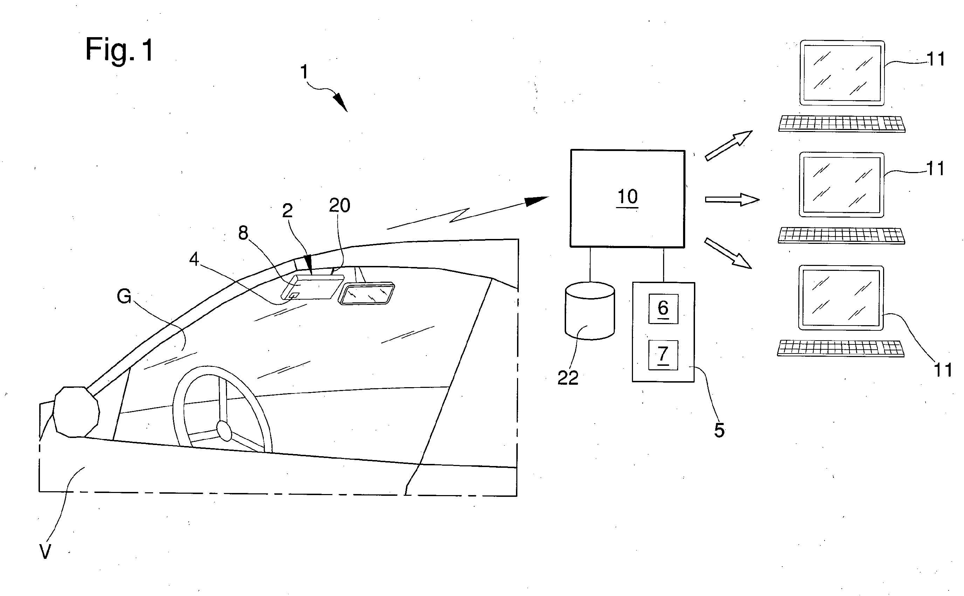

As shown in figure 1, the container 8 can be positioned on the glass G, inside the compartment, close to the central rear-view mirror.

Usefully, the positioning of the apparatus 2 in correspondence to the rear-view mirror of the vehicle V permits the speedy connection of the apparatus itself to the vehicle power supply.

Furthermore, the apparatus 2 in no way hinders the driver or the passengers of the vehicle and is not unaesthetic.

Different positioning of the apparatus 2 cannot however be ruled out, e.g. near one of the lateral columns supporting the windscreen.

Usefully, the container 8 comprises a resting portion 9 which can be associated with the glass G by means of fixing means consisting of an adhesive layer. Other fixing means cannot however be ruled out comprising, e.g., a fastening of mechanical type. The apparatus 2 is suitable for sending an emergency signal in case of an anomalous event being detected such as, e.g., an accident, a breakdown or a theft.

Usefully, the sending of the emergency signal can also be done manually by means of a push-button 4 on the container 8.

As shown in figure 2, the push-button 4 corresponds to the luminous signaling device. Therefore, the push-button 4 itself is backlit with different colours to signal the different driving states to the driver.

Preferably, lighting with a white LED indicates priority functions are in progress with respect to the functions pertinent to the monitoring of driving style.

One of such priority functions, e.g., can be made of an eCall or bCall. In this case, the lighting up of the white LED indicates that the eCall or bCall has been taken in charge.

The push-button 4 can be made on the container 8, in correspondence to a portion opposite the resting portion 9, so it can be easily reached by the driver or by the passengers inside the vehicle V, even in the most difficult situations. The push-button 4, furthermore, can be operated without distracting the driver.

Different positions, numbers and types of push-button and of luminous signaling device cannot however be ruled out.

Advantageously, the apparatus 2 can be provided with other push-buttons for enabling other services.

Several push-buttons on the container 8 can be used for example, for so-called eCall, bCall services or for comfort services such as the remote control of automatic gate opening or similar services.

Usefully, the apparatus 2 can be equipped with a sound signaling device usable, e.g., in case of alarm or hazard signaling or in the case of the system 1 detecting the possibility of the driver falling asleep.

The system 1 also comprises a remote central unit, shown in figure 1 by the reference 10, suitable for recording the information collected by the apparatus 2 and processing it to determine the vehicle use modes.

As shown in figure 1, the information thus processed can be made available for accessing from one or more remote terminals 11.

As schematically shown in figure 3, the detection means 3 of the apparatus 2 comprise a locating device 12 for locating the vehicle V which has a satellite signal receiver 13 of the type used in Global Positioning System (GPS), Galileo Positioning System satellite navigation systems or the like.

In particular, the position measurements taken by the locating device 12 comprise the longitude, latitude and, possibly, the altitude coordinates of the vehicle V.

The apparatus 2 also comprises a measuring device 14 for measuring the instantaneous acceleration of the vehicle V.

In particular, the measuring device 14 can be composed of a three-axis accelerometer.

The apparatus 2 also comprises a communication unit 15 associated with the locating device 12 and the accelerometer 14 suitable for sending the information collected on the position and instantaneous acceleration of the vehicle V towards the above remote central unit 10.

In particular, the communication unit 15 comprises a transmitter 16 and a receiver 17 operating in the frequency spectrum with mobile phone protocols of the GSM, GPRS, UMTS type or the like.

The apparatus 2 comprises a processing unit 18 connected to the locating device 12, to the accelerometer 14 and to the communication unit 15.

In particular, the processing unit 18 can be composed of a microprocessor or similar device and/or of a software application suitable for controlling the locating device 12, the accelerometer 14 and the communication unit 15 and the information detected, transmitted and received by the remote central unit 10.

Usefully, the apparatus 2 can comprise a temporary storage unit 19 for storing the collected information connected to the processing unit 18.

Usefully, the information collected by the temporary storage unit 19 can comprise an identification reference of the vehicle V and, if necessary, an identification reference of one or more users of the vehicle itself.

Usefully, the apparatus 2 can comprise a supplementary short-range communication unit, not shown in the illustrations, suitable for communicating with an electronic device installed on the vehicle V, e.g., an alarm, an immobilizer, or a radio device connected to the diagnostics socket, or fitted inside the compartment of the vehicle itself or around the outer perimeter of the vehicle (e.g., for communication with the sensors for opening and closing the home garage door or the remote control of the alarms inside the home) or also for communicating with other vehicles.

The short-range supplementary unit could also be composed of or could comprise a Bluetooth type device or the like for communication with a microphone for the speakerphone service.

For this purpose, the apparatus 2 could be fitted with an integrated audio system for voice control.

For example, the supplementary communication unit can comprise radiofrequency signal transmission/receiving means.

The apparatus 2 can also comprise means for connection with a communication channel on the vehicle V, of the type, e.g. of the conventional channel CAN (Controller Area Network).

Usefully, the apparatus 2 can comprise one or more cameras connected to the electronic management and control means and suitable for collecting images from outside and/or inside the vehicle.

In particular, in the case of an accident or theft, the collected images can be sent to the remote central unit 10 for subsequent processing.

The apparatus 2 comprises electric connection means for connecting up to the power supply of the vehicle, indicated in the illustrations by the reference 20.

In particular, the electric connection means 20 comprise one or more power leads 20 which can be connected to the positive pole and to the negative pole respectively of the electric power supply battery of the vehicle V.

Usefully, the electric connection means 20 can comprise a connection lead for connecting to the positive under key of the vehicle V.

Advantageously, the positioning of the apparatus 2 in correspondence to the rear-view mirror of the vehicle V allows the quick connection of the apparatus itself to the power supply of the vehicle.

In fact, conventionally, in the rear-view mirror area, vehicles have the direct positive of the battery, not under key, and the direct negative of the battery and, consequently, the installation of the leads and the electric connection of the apparatus 2 can be done in a simple and quick way.

The integration of the apparatus 2 cannot however be ruled out with the light fitting (or with the rear-view mirror itself), inside which, e.g., the telematics of the apparatus itself could be housed.

The apparatus 2 can also comprise an emergency supply unit, of the type of a supercapacitor, a battery or the like, suitable for operating in case of an interruption of the power supply from the vehicle battery.

The apparatus 2 could also be prepared with a reader of a user identification device of the type, e.g., of a credit card, etc.

Usefully, the apparatus 2 can comprise an interface apparatus 21 associable with at least an external electronic device suitable for the local recording and/or display of the collected position and instantaneous acceleration information.

In particular, the interface apparatus 21 can comprise, e.g., a radio-wave transceiver of the Bluetooth, WiFi type or the like, an infra-red transceiver of the IrDA (Infrared Device Application) type or a USB port.

Such interfacing with an external electronic device can be used, e.g., in the case of an accident, to check the dynamics of the accident on site or, in general, in the case of its being impossible to communicate with the remote central unit 10 due to damage to the communication unit 15 or due to the absence of a signal.

The remote central unit 10 can be made up of an electronic processor or of a network of electronic processors.

Usefully, the information on the driving modes of the vehicle V detected by the apparatus 2 is transmitted to the remote central unit 10 by means of the communication unit 15 and the assessment means 5 of such information can be made in the remote central unit 10.

Preferably, furthermore, the assessment means of the information on the driving modes of the vehicle V, besides being present in the remote central unit 10, are also made on the apparatus 2.

Such assessment means are indicated altogether in figure 3 by the reference 5' and are provided with first comparison means 6' suitable for comparing the instantaneous speed of the vehicle V with one or more reference speed values and with second comparison means 7' suitable for comparing the variations in instantaneous acceleration of the vehicle V with one or more reference acceleration variation values.

In practice, assessment means 5' are also present in the apparatus 2, as well as in the remote central unit 10, so as to significantly reduce the transmission and receiving of information between the apparatus and the remote central unit themselves.

Usefully, the assessment means 5 in the remote central unit 10 are suitable for defining the general principles which, periodically, are sent to the apparatus 2.

On the apparatus 2, depending on the periodical updates received, the assessment means 5' process the information on the driving modes, consequently generating the signals for the driver of the vehicle V.

In the remote central unit 10, all the information is then stored relating to the driving modes and/or to the signals sent to the driver for the historical reconstruction of all the events.

Different embodiments of the system 1 cannot however be ruled out wherein the assessment means are made only in the remote central unit 10 or only in the apparatus 2.

In particular, the assessment means 5 can be made up of an opportune software application and an opportune hardware.

Usefully the remote central unit 10 comprises means for determining the instantaneous speed of the vehicle V. Such determination is made starting with the variations in position of the vehicle V detected over time by the locating device 12. Such means of determination can be, e.g., of the dedicated software application type or the like.

Usefully, the remote central unit 10 can comprise storage means 22 for recording the detected information and the information processed over time.

Furthermore, the information processed by the remote central unit 10 can comprise: statistical data on the use of the vehicle such as actual time of use, use time slots, area of use and related hazardousness for accidents or theft or the like; statistical data and one or more graphic representations of variations in instantaneous acceleration of the vehicle suitable for reconstructing the dynamics of an accident.

In use, during the use of the vehicle, the apparatus 2 collects information through the locating device 12 and the accelerometer 14.

In particular, this detected information is such as to dynamically determine the driving modes of the driver.

The information thus detected is subsequently sent to the remote central unit 10 by means of the communication unit 15 and subsequently processed.

The processed information comprises data such as the instantaneous running speed of the vehicle V, determined starting with the data detected by the locating device 12, and the variations in instantaneous acceleration of the vehicle itself.

During processing by the remote central unit 10, the first and the second comparison means 6 and 7 determine the presence or not of abnormal driving modes by the driver of the vehicle V and, if necessary, generate warning signals sent to the apparatus 2 and signalled to the driver by means of the luminous signaling device 4.

It has in fact been ascertained how the described invention achieves the proposed objects.

## Claims

1. System (1) for monitoring the driving modes of a vehicle, comprising at least an apparatus (2) installable on a vehicle (V) and having detection means (3) for detecting information on the driving modes of said vehicle (V), wherein said information on the driving mode of the vehicle (V) comprises at least one between the instantaneous running speed of the vehicle (V), the variations of instantaneous acceleration of the vehicle (V) along at least a direction and the position of the vehicle (V), and signaling means (4) of visual and/or sound type suitable for assisting the driver of the vehicle (V) when driving, wherein said signaling means (4) comprise a luminous signaling device (4) made on said apparatus (2) and suitable for signaling with different colors a normal driving state, a state of alert and a dangerous driving state, and wherein said system (1) comprises assessment means (5, 5') of said information on the driving modes of said vehicle (V) associated with said signaling means (4) and suitable for controlling said signaling means (4) to signal to the driver of the vehicle (V):
- said normal driving state, corresponding to a driving mode of the driver of the vehicle (V) such as not to produce potentially dangerous situations;
- said state of alert, corresponding to an abnormal driving mode of the driver of the vehicle (V);
- a dangerous driving state, corresponding to a driving mode of the driver of the vehicle (V) such as to produce potentially dangerous situations;
**characterized by** the fact that said apparatus comprises supporting means (8) which can be positioned in proximity of a glass (G) inside the compartment of said vehicle (V), wherein said supporting means (8) are made up of a box-shaped container (8) having a resting portion (9) which can be positioned on said glass (G) by means of fixing means,
and by the fact that said apparatus (2) comprises at least a push-button (4) which can be pushed to send an emergency signal, wherein said push-button (4) corresponds to said luminous signaling device (4) and the push-button (4) itself can be backlit with different colors to signal to the driver said normal driving state, said state of alert and said dangerous driving state.

2. System (1) according to claim 1, **characterized by** the fact that said assessment means (5, 5') comprise first comparison means (6, 6') for comparing said instantaneous speed of the vehicle (V) with at least one reference speed value, and by the fact that:
- if, within a preset time interval, said instantaneous speed is lower than said reference speed value, then said signaling means (4) signal to the driver said normal driving state;
- if, within a preset time interval, said instantaneous speed varies suddenly, exceeding said reference speed value in certain instants, then said signaling means (4) signal to the driver said state of alert;
- if, within a preset time interval, said instantaneous speed is higher than said reference speed value, then said signaling means (4) signal to the driver said dangerous driving state.

3. System (1) according to one or more of the preceding claims, **characterized by** the fact that said assessment means (5, 5') comprise second comparison means (7, 7') for comparing said variations of the instantaneous acceleration of the vehicle (V) with at least a reference acceleration variation value, and by the fact that:
- if, within a preset time interval, said variations of the instantaneous acceleration are lower than said reference acceleration variation value, then said signaling means (4) signal to the driver said normal driving state;
- if, within a preset time interval, said variations of the instantaneous acceleration are higher than said reference acceleration variation value, then said signaling means (4) signal to the driver said state of alert;
- if said variations of the instantaneous acceleration higher than said reference acceleration variation value continue over time, then said signaling means (4) signal to the driver said dangerous driving state.

4. System (1) according to one or more of the preceding claims, **characterized by** the fact that at least one between said reference speed value and said reference acceleration value is set according to said position of the vehicle (V).

5. System (1) according to one or more of the preceding claims, **characterized by** the fact that it comprises at least a remote central unit (10) for processing said detected information on the driving modes of said vehicle (V) and by the fact that said apparatus (2) comprises at least a communication unit (15) with said remote central unit (10).

## Patentansprüche

1. System (1) zum Überwachen der Fahrmodi eines Fahrzeugs, wobei das System wenigstens eine Vorrichtung (2), die an einem Fahrzeug (V) installiert werden kann und Erfassungsmittel (3) zum Erfassen von Informationen über die Fahrmodi des Fahrzeugs (V) aufweist, wobei die Informationen über die Fahrmodi des Fahrzeugs (V) wenigstens eines von der augenblicklichen Fahrgeschwindigkeit des Fahrzeugs (V), den Veränderungen der augenblicklichen Beschleunigung des Fahrzeugs (V) entlang wenigstens einer Richtung und der Position des Fahrzeugs (V) umfassen, und Signalisierungsmittel (4) der visuellen und/oder akustischen Art, die zum Unterstützen des Fahrers des Fahrzeugs (V) beim Fahren geeignet sind, umfasst, wobei die Signalisierungsmittel (4) eine leuchtende Signalisierungseinrichtung (4) umfassen, die an der Vorrichtung (2) angeordnet und geeignet ist zum Signalisieren eines normalen Fahrzustandes, eines Alarmzustandes und eines gefährlichen Fahrzustandes mit unterschiedlichen Farben, und wobei das System (1) Mittel (5, 5') zur Bewertung der Informationen über die Fahrmodi des Fahrzeugs (V) umfasst, die mit den Signalisierungsmitteln (4) verknüpft und geeignet sind zum Steuern der Signalisierungsmittel (4), um dem Fahrer des Fahrzeugs (V) zu signalisieren:
- den normalen Fahrzustand, der einem derartigen Fahrmodus des Fahrers des Fahrzeugs (V), dass keine möglicherweise gefährlichen Situationen erzeugt werden, entspricht,
- den Alarmzustand, der einem anormalen Fahrmodus des Fahrers des Fahrzeugs (V) entspricht,
- einen gefährlichen Fahrzustand, der einem derartigen Fahrmodus des Fahrers des Fahrzeugs (V), dass möglicherweise gefährlichen Situationen erzeugt werden, entspricht,
**gekennzeichnet durch** die Tatsache, dass die Vorrichtung Stützmittel (8) umfasst, die in der Nähe eines Glases (G) innerhalb der Kabine des Fahrzeugs (V) angeordnet werden können, wobei die Stützmittel (8) aus einem kastenförmigen Behälter (8) bestehen, der einen Auflageabschnitt (9) hat, der mit Hilfe von Befestigungsmitteln auf dem Glas (G) angeordnet werden kann, und durch die Tatsache, dass die Vorrichtung (2) wenigstens einen Drucktaster (4) umfasst, der gedrückt werden kann, um ein Notsignal zu senden, wobei der Drucktaster (4) der leuchtenden Signalisierungseinrichtung (4) entspricht und der Drucktaster (4) selbst mit unterschiedlichen Farben hintergrundbeleuchtet sein kann, um dem Fahrer den normalen Fahrzustand, den Alarmzustand und den gefährlichen Fahrzustand zu signalisieren.

2. System (1) nach Anspruch 1, **gekennzeichnet durch** die Tatsache, dass die Bewertungsmittel (5, 5') erste Vergleichsmittel (6, 6') zum Vergleichen der augenblicklichen Geschwindigkeit des Fahrzeugs (V) mit wenigstens einem Referenzgeschwindigkeitswert umfassen, und durch die Tatsache, dass:
- falls, innerhalb eines voreingestellten Zeitintervalls, die augenblickliche Geschwindigkeit niedriger ist als der Referenzgeschwindigkeitswert, dann die Signalisierungsmittel (4) dem Fahrer den normalen Fahrzustand signalisieren,
- falls, innerhalb eines voreingestellten Zeitintervalls, sich die augenblickliche Geschwindigkeit plötzlich verändert, wobei sie den Referenzgeschwindigkeitswert in gewissen Augenblicken überschreitet, dann die Signalisierungsmittel (4) dem Fahrer den Alarmzustand signalisieren,
- falls, innerhalb eines voreingestellten Zeitintervalls, die augenblickliche Geschwindigkeit höher ist als der Referenzgeschwindigkeitswert, dann die Signalisierungsmittel (4) dem Fahrer den gefährlichen Fahrzustand signalisieren.

3. System (1) nach einem oder mehreren der vorhergehenden Ansprüche, **gekennzeichnet durch** die Tatsache, dass die Bewertungsmittel (5, 5') zweite Vergleichsmittel (7, 7') zum Vergleichen der Veränderungen der augenblicklichen Beschleunigung des Fahrzeugs (V) mit wenigstens einem Referenzbeschleunigungsveränderungswert umfassen, und durch die Tatsache, dass:
- falls, innerhalb eines voreingestellten Zeitintervalls, die Veränderungen der augenblicklichen Beschleunigung niedriger sind als der Referenzbeschleunigungsveränderungswert, dann die Signalisierungsmittel (4) dem Fahrer den normalen Fahrzustand signalisieren,
- falls, innerhalb eines voreingestellten Zeitintervalls, die Veränderungen der augenblicklichen Beschleunigung höher sind als der Referenzbeschleunigungsveränderungswert, dann die Signalisierungsmittel (4) dem Fahrer den Alarmzustand signalisieren,
- falls sich die Veränderungen der augenblicklichen Beschleunigung, die höher sind als der Referenzbeschleunigungsveränderungswert, über die Zeit fortsetzen, dann die Signalisierungsmittel (4) dem Fahrer den gefährlichen Fahrzustand signalisieren.

4. System (1) nach einem oder mehreren der vorhergehenden Ansprüche, **gekennzeichnet durch** die Tatsache, dass wenigstens einer von dem Referenzgeschwindigkeitswert und dem Referenzbeschleunigungsveränderungswert entsprechend der Position des Fahrzeugs (V) eingestellt wird.

5. System (1) nach einem oder mehreren der vorhergehenden Ansprüche, **gekennzeichnet durch** die Tatsache, dass es wenigstens eine Fernzentraleinheit (10) zum Verarbeiten der erfassten Informationen über die Fahrmodi des Fahrzeugs (V) umfasst, und durch die Tatsache, dass die Vorrichtung (2) wenigstens eine Kommunikationseinheit (15) mit der Fernzentraleinheit (10) umfasst.

## Revendications

1. Système (1) de surveillance des modes de conduite d'un véhicule, comprenant au moins un appareil (2) pouvant être installé sur un véhicule (V) et possédant des moyens de détection (3) pour détecter des informations sur les modes de conduite dudit véhicule (V), dans lequel lesdites informations sur le mode de conduite du véhicule (V) comprennent au moins un élément parmi la vitesse de course instantanée du véhicule (V), les variations de l'accélération instantanée du véhicule (V), et des moyens de signalisation (4) de type visuel et/ou auditif adaptés pour assister le conducteur du véhicule (V) lors de la conduite, dans lequel lesdits moyens de signalisation (4) comprennent un dispositif de signalisation lumineuse (4) fabriqué sur ledit appareil (2) et adapté pour signaler par des couleurs différentes un état de conduite normale, un état d'alerte et un état de conduite dangereuse, et dans lequel ledit système (1) comprend des moyens d'évaluation (5, 5') desdites informations sur les modes de conduite dudit véhicule (V) associés auxdits moyens de signalisation (4) et adaptés pour contrôler lesdits moyens de signalisation (4) pour qu'ils signalent au conducteur du véhicule (V) :
- ledit état de conduite normale, correspondant à un mode de conduite du conducteur du véhicule (V) tel qu'aucune situation potentiellement dangereuse n'est produite ;
- ledit état d'alerte, correspondant à un mode de conduite anormale du conducteur du véhicule (V) ;
- un état de conduite dangereuse, correspondant à un mode de conduite du conducteur du véhicule (V) tel que des situations potentiellement dangereuses sont produites ;
**caractérisé en ce que** ledit appareil comprend des moyens de support (8) qui peuvent être positionnés à proximité d'une vitre (G) à l'intérieur du compartiment dudit véhicule (V), dans lequel lesdits moyens de support (8) sont composés d'un récipient en forme de boîte (8) ayant une partie de soutien (9) pouvant être positionnée sur ladite vitre (G) au moyen de moyens de fixation,
et **en ce que** ledit appareil (2) comprend au moins un bouton-poussoir (4) pouvant être poussé pour envoyer un signal d'urgence, dans lequel ledit bouton-poussoir (4) correspond audit dispositif de signalisation lumineuse (4) et le bouton-poussoir (4) peut lui-même être rétroéclairé avec des couleurs différentes pour signaler au conducteur ledit état de conduite normale, ledit état d'alerte et ledit état de conduite dangereuse.

2. Système (1) selon la revendication 1, **caractérisé en ce que** lesdits moyens d'évaluation (5, 5') comprennent des premier moyens de comparaison (6, 6') pour comparer ladite vitesse instantanée du véhicule (V) avec au moins une valeur de vitesse de référence, et **en ce que** :
- si, pendant un intervalle de temps prédéterminé, ladite vitesse instantanée est moins élevée que ladite valeur de vitesse de référence, alors lesdits moyens de signalisation (4) signalent au conducteur ledit état de conduite normale ;
- si, pendant un intervalle de temps prédéterminé, ladite vitesse instantanée varie soudainement, excédant ladite valeur de vitesse de référence à certains moments, alors lesdits moyens de signalisation (4) signalent au conducteur ledit état d'alerte ;
- si, pendant un intervalle de temps prédéterminé, ladite vitesse instantanée est plus élevée que ladite valeur de vitesse de référence, alors lesdits moyens de signalisation (4) signalent au conducteur ledit état de conduite dangereuse.

3. Système (1) selon l'une ou plusieurs des revendications précédentes, **caractérisé en ce que** lesdits moyens d'évaluation (5, 5') comprennent des deuxièmes moyens de comparaison (7, 7') pour comparer lesdites variations de l'accélération instantanée du véhicule (V) avec au moins une valeur de variation de l'accélération de référence, et **en ce que** :
- si, pendant un intervalle de temps prédéterminé, lesdites variations de l'accélération instantanée sont moins élevées que ladite valeur de variation de l'accélération de référence, alors lesdits moyens de signalisation (4) signalent au conducteur ledit état de conduite normale ;
- si, pendant un intervalle de temps prédéterminé, lesdites variations de l'accélération instantanées sont plus élevées que ladite valeur de variation de l'accélération de référence, alors lesdits moyens de signalisation (4) signalent au conducteur ledit état d'alerte ;
- si lesdites variations de l'accélération instantanée plus élevées que ladite valeur de variation de l'accélération de référence se poursuivent au fil du temps, alors lesdits moyens de signalisation (4) signalent au conducteur ledit état de conduite dangereuse.

4. Système (1) selon l'une ou plusieurs des revendications précédentes, **caractérisé en ce qu'**au moins une valeur parmi ladite valeur de vitesse de référence et ladite valeur d'accélération de référence est réglée selon ladite position du véhicule (V).

5. Système (1) selon l'une ou plusieurs des revendications précédentes, **caractérisé en ce qu'**il comprend au moins une unité centrale à distance (10) pour traiter lesdites informations détectées sur les modes de conduite dudit véhicule (V) et **en ce que** ledit appareil (2) comprend au moins une unité de communication (15) avec ladite unité centrale à distance (10).
